# EUROPÄISCHE PATENTANMELDUNG

(11) **EP 0 849 489 A2**
(43) Veröffentlichungstag der Anmeldung: **24.06.1998**
(21) Anmeldenummer: 97119482.4
(22) Anmeldetag: 07.11.1997
(51) Int. Cl.: F16F 1/12, F16F 13/26, F16F 13/00

(54) **Verfahren zur Regelung und Steuerung eines Stützlagers**

(30) Priorität: 20.12.1996 DE 19653571
(71) Anmelder: Bayerische Motoren Werke Aktiengesellschaft, 80788 München (DE)
(72) Erfinder: Peters, Norbert, 80959 München (DE); Rötsch, Karl, 85229 Markt Indersdorf (DE)

(57) **Zusammenfassung**

Bei einem Stützlager (1) mit parallel zueinander angeordneten Federelementen (5, 9) wird bei einer statisch oder quasistatisch auf das Stützlager (1) wirkenden Kraft die Einfederung (Δs) durch Verstellung des zweiten Federelementes (9) kompensiert. Durch diese Niveauregulierung des Stützlagers (1) wird unabhängig von der auf das Stützlager (1) wirkenden Vorlast der Betriebspunkt immer in die Konstruktionslage gelegt.

## Beschreibung

Die Erfindung bezieht sich auf ein Verfahren zur Regelung oder Steuerung eines wenigstens zwei Federelemente aufweisenden Stützlagers nach dem Oberbegriff der Ansprüche 1 und 2 sowie auf ein Stützlager zur Durchführung des Verfahrens.

Aus der DE 37 05 579 A1 ist ein verstellbares Motorlager bekannt, das aus zwei in Reihe zueinander angeordneten Federelementen (Gummielement bzw. Luftfeder) besteht sowie zusätzlich eine hydraulische Dämpfung aufweist. Über eine elektronische Steuereinheit kann die Dämpfung des Motorlagers verändert werden, ebenso wie der Luftdruck der Luftfeder. Die durch die Veränderung des Luftdrucks erreichte Veränderung der Federsteifigkeit des Motorlagers ist dann vorzunehmen, wenn sehr hohe Anforderungen an die Abschirmung von Motorschwingungen gestellt werden.

Mit der elastischen Lagerung eines Aggregats ist eine begrenzte Beweglichkeit des Aggregates verbunden, so daß ein bestimmter Freiraum um das Aggregat vorzusehen ist. Anschläge im Stützlager begrenzen den Federweg des Aggregats und verhindern einen Kontakt mit benachbarten Bauteilen. Im Bereich nahe der Anschläge weisen Stützlager üblicherweise eine progressive Federkennung auf, während die Federkennlinie im Bereich des regulären Arbeitsbereiches des Stützlagers zumindest annähernd linear verläuft. Durch alterungsbedingte Setzerscheinungen sowie durch sich ändernde Vorlasten auf dem Stützlager kann sich jedoch der zur Verfügung stehende Federweg verringern, so daß sich der Betriebspunkt des Stützlagers in Richtung eines der progressiven Äste der Federkennlinie verschiebt.

Durch die höhere Federsteifigkeit verschlechtern sich hierbei die akustischen Eigenschaften des Stützlagers.

Aufgabe der Erfindung ist es, der oben geschilderte Problematik einer Verschiebung des Betriebspunktes eines Stützlagers entgegenzuwirken.

Diese Aufgabe wird durch die Merkmale der Ansprüche 1 und 2 jeweils für sich oder in Kombination gelöst. Anspruch 10 beschreibt ein Stützlager zur Durchführung des Verfahrens.

Kerngedanke der Erfindung ist es, ein Stützlager mit einem verstellbaren Federelement so anzusteuern, daß unabhängig von alterungsbedingten Setzerscheinungen und von Vorlasten auf dem Stützlager in beiden Richtungen ein gleichbleibender Federweg wie im Ausgangszustand zur Verfügung steht. Dies wird durch das erfindungsgemäße Verfahren erreicht, indem das eine Federelement (verstellbare Zusatzfeder) das andere Federelement (Tragfeder) derart anhebt bzw. absenkt, daß Setzerscheinungen und/oder Vorlasten kompensiert werden und in jedem Fall der maximale Federweg in beiden Richtungen zur Verfügung steht. Somit kann der vorhandene Freiraum für das Aggregat tatsächlich ausgenutzt werden: Wirken Trägheitskräfte auf das Aggregat ein, wie dies beispielsweise bei Kraftfahrzeugen beim Überfahren von Bodenunebenheiten der Fall ist, so steht durch die 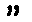 Niveauregulierung" des Stützlagers immer der maximale Federweg zur Verfügung. Das Stützlager arbeitet somit stets in einem optimalen Betriebsbereich der linearen Federkennung, mit Vorteilen hinsichtlich der Schwingungs- und Geräuschübertragung.

Da die Tragfeder eines Stützlagers in der Regel aus einem (ggf. hydraulisch oder pneumatisch unterstützen) Gummielement besteht, treten an einem Stützlager nach einer bestimmten Betriebszeit Setzerscheinungen ein. Hierdurch stehen bei einem gealterten Stützlager nur mehr eingeschränkte Federwege zur Verfügung. Dem Setzen kann durch eine entsprechende Vorhaltung des Stützlagers im Neuzustand entgegengewirkt werden. Durch die erfindungsgemäße Kompensation des Setzens gemäß Anspruch 1 wird über die gesamte Betriebsdauer des Stützlagers ein gleichbleibender optimaler Betriebspunkt sichergestellt.

Gemäß dem Verfahren nach Anspruch 2 wird auch eine aggregats- bzw. betriebsbedingte Abweichung von der Normalbelastung des Stützlagers ausgeglichen. Derartige Vorlasten sind hauptsächlich statischer bzw. quasistatischer Natur und können daher durch eine Steuerung oder Regelung kompensiert werden, mit dem Ergebnis einer Einhaltung der Konstruktionslage des Stützlagers in nahezu allen Betriebszuständen des Aggregats bzw. der mit dem Aggregat versehenen Einrichtung, z. B. einem Kraftfahrzeug. Die Ansprüche 4 bis 6 geben Verfahren zum Ausgleich möglicher Vorlasten an. Neben den beispielhaft angeführten Vorlasten können selbstverständlich noch weitere Belastungen des Stützlagers kompensiert werden.

Durch die Parallelschaltung des verstellbaren Federelements (Anspruch 3) addiert sich dessen Federrate zur Federrate der Tragfeder des Stützlagers. Damit ist im Unterschied zur Reihenschaltung der Federelemente gemäß der DE 37 05 579 A1 eine bessere Abstimmung der beiden Federelemente aufeinander möglich. Insbesondere wird die Gesamt-Federcharakteristik durch die erfindungsgemäße Niveauregulierung nicht verändert, wenn das verstellbare Federelement eine lineare Kraft-/Weg-Kennlinie aufweist, was beim Stand der Technik nicht der Fall ist.

In der Praxis werden aus Kostengründen identische Stützlager für Aggregate mit mehr oder weniger voneinander abweichenden Massen eingesetzt. So kommen beispielsweise bei Kraftfahrzeugen innerhalb einer Motorbaureihe identische Stützlager zum Einsatz, durch die das Mehr- oder Mindergewicht von Motorvarianten, der Ausrüstung mit Schalt- oder Automatikgetriebe, Sonderausstattungen (beispielsweise Klimaanlage mit motorseitigem Kompressor), etc. nicht berücksichtigt wird. Durch die Gewichtsabweichung der Aggregate ist ein Teil des Federweges nach einer Seite bereits aufgebraucht.
Diese statische Vorlast wird erfindungsgemäß nach gemäß Anspruch 4 kompensiert. Hierdurch werden maximale Federwege nach beiden Seiten realisiert, unabhängig von der jeweiligen Konfiguration des Aggregats. Andererseits kann die Anzahl der notwendigen Varianten von Stützlagern reduziert werden, da durch das erfindungsgemäße Verfahren ein und dasselbe Stützlager über einen breiteren Traglastbereich eingesetzt werden kann. Die jeweilige Konfiguration des Aggregats wird in einfacher Weise in einer elektronischen Steuereinrichtung abgelegt, die die Gewichtsabweichung des Aggregats durch entsprechende Ansteuerung des Stützlagers korrigiert.

Das Verfahren nach Anspruch 5 kompensiert Vorlasten, die aus dem Betrieb des Aggregats resultieren: Da sich das vom Aggregat erzeugte Drehmoment an den Stützlagern abstützt, kommt es bei einem unter Last stehenden Aggregat zu einer Verschiebung des Betriebspunktes des Stützlagers. Insbesondere bei Laständerungen treten Lastwechselreaktionen in den Stützlagern auf. Bei Aggregaten von Kraftfahrzeugen ergeben sich derartige Lastschwankungen in Folge von Änderungen des Motorantriebsmomentes bzw. Motorschleppmomentes. Da es sich bei den beschriebenen Erscheinungen um relativ langsam verlaufende (quasistatische) Vorgänge handelt, können diese durch die Verstellung des Federelementes gemäß Anspruch 5 kompensiert werden.

Durch das Verfahren nach Anspruch 6 werden Vorlasten ausgeglichen, die aus dem Betrieb derjenigen Einrichtung, in die das Aggregat eingebaut ist, resultieren. Bei Kraftfahrzeugen kann somit beispielsweise bei Kurvenfahrt ein Ausgleich der fliehkraftbedingten unterschiedlichen Ein- bzw. Ausfederungen an den einzelnen Motorlagern erfolgen.

Zum Ausgleich des Setzverhaltens eines Stützlagers wird gemäß Anspruch 7 dessen empirisch ermittelte Setzungskennlinie in einer elektronischen Steuereinheit abgespeichert und das verstellbare Federelement über die Steuereinheit so verstellt, daß mit fortschreitender Alterung des Stützlagers eine Kompensation im Sinne einer Niveauregulierung erfolgt.

Das Verfahren nach Anspruch 8 erfaßt verschiedene Parameter des Aggregates bzw. der Einrichtung mit dem Aggregat, um Rückschlüsse auf den Betriebszustand des Aggregates bzw. der Einrichtung und damit die Belastung des Stützlagers zu erhalten. In der Steuereinrichtung werden diese Parameter verarbeitet und eine Stellgröße für das verstellbare Federelement ermittelt, durch die eine Kompensation des Federweges im Stützlager erreicht wird. Bei Antriebsaggregaten von Kraftfahrzeugen kann beispielsweise durch eine Sensierung der Fahrgeschwindigkeit, der Gaspedalstellung (und der (Änderung der) Geschwindigkeit der Gaspedalbetätigung), der Drosselklappenstellung etc. auf die Belastung bzw. die Belastungsänderung der Stützlager durch das Aggregat geschlossen werden. Durch Erfassen der Fahrzeuggeschwindigkeit, des Lenkwinkels (und der (Änderung der) Geschwindigkeit der Lenkwinkeländerung), der Bremspedalstellung (und der (Änderung der) Geschwindigkeit der Bremspedalbetätigung bzw. des Bremsdruckes), etc. kann auf den Betriebszustand des Fahrzeugs geschlossen werden. Entsprechend der Auswertung dieser Daten werden die einzelnen Stützlager angesteuert. Vorteilhaft ist hierbei, daß die benötigten Daten oftmals sowieso im Fahrzeug zur Verfügung stehen und nur über eine entsprechende Steuereinrichtung ausgewertet werden müssen.

Durch die Regelung gemäß Anspruch 9 wird unmittelbar der an den Stützlagern zur Verfügung stehende Federweg sensiert und in der Regeleinrichtung ein Soll-Ist-Vergleich durchgeführt. Bei einer Verschiebung des Betriebspunktes des Stützlagers wird das verstellbare Federelement über die Regeleinrichtung entsprechend beaufschlagt, so daß eine Kompensation der Vorlast erreicht wird. Durch den geschlossenen Regelkreis kann unabhängig von den Betriebsbedingungen des Stützlagers immer eine exakte Niveauregulierung erreicht werden. Hierzu ist lediglich ein zusätzlicher Wegaufnehmer an den Stützlagern erforderlich. Eine Sensierung verschiedener Parameter des Aggregates bzw. des Kraftfahrzeuges erübrigt sich. Je nach Regelgeschwindigkeit ist es auch möglich, dynamisch sich ändernde Vorlasten zu kompensieren, wie sie beispielsweise bei Kraftfahrzeugen als Trägheitskräfte des Aggregats beim Überfahren von Bodenunebenheiten auftreten

Die Ansprüche 10 bis 13 beschreiben Stützlager, mit denen die oben beschriebene Niveauregulierung erreicht werden kann. Durch Verstellung des zweiten Federelements wird das tragende erste Federelement entsprechend angehoben bzw. abgesenkt, so daß die Ausgangslage des Stützlagers nachgestellt werden kann. Von Vorteil ist hierbei, daß das zweite, verstellbare Federelement parallel zum ersten, tragenden Federelement angeordnet ist.

Besonders vorteilhaft ist es, wenn das verstellbare Federelement eine zumindest annähernd lineare Federrate (Anspruch 11) aufweist, da hierdurch die Gesamtfederkennung des Stützlagers lediglich verschoben, der angestrebte (z. B. lineare) Verlauf der Kennlinie des Stützlagers jedoch nicht verändert wird.

Anspruch 12 beschreibt die Anwendung einer verbreiteten Stützlagerausbildung, insbesondere für Kraftfahrzeuge. Selbstverständlich können jedoch auch andere Ausführungsformen für das erste Federelement zur Anwendung kommen, wie dies auch in den Ausführungsbeispielen beschrieben ist.

Die bevorzugte Ausführung des zweiten Federelementes gemäß Anspruch 13 zeichnet sich durch eine Reihe von Vorteilen aus: Schraubenfedern aus Stahl übertragen Kräfte überwiegend nur in Richtung ihrer Längserstreckung (Axialrichtung), so daß in Federquerrichtung eine oftmals erwünschte, in akustischer Hinsicht vorteilhafte Entkopplung erreicht wird. Die hydraulische Verstellung des zweiten Federelementes beansprucht im Vergleich zu einer pneumatischen Verstellung nur wenig Bauraum. Die Verstellung kann mit hoher Regelgeschwindigkeit erfolgen. Außerdem ist in vielen Fällen insbesondere bei Kraftfahrzeugen bereits ein Hydrauliksystem vorhanden, so daß sich ein nur geringer zusätzlicher Aufwand ergibt.

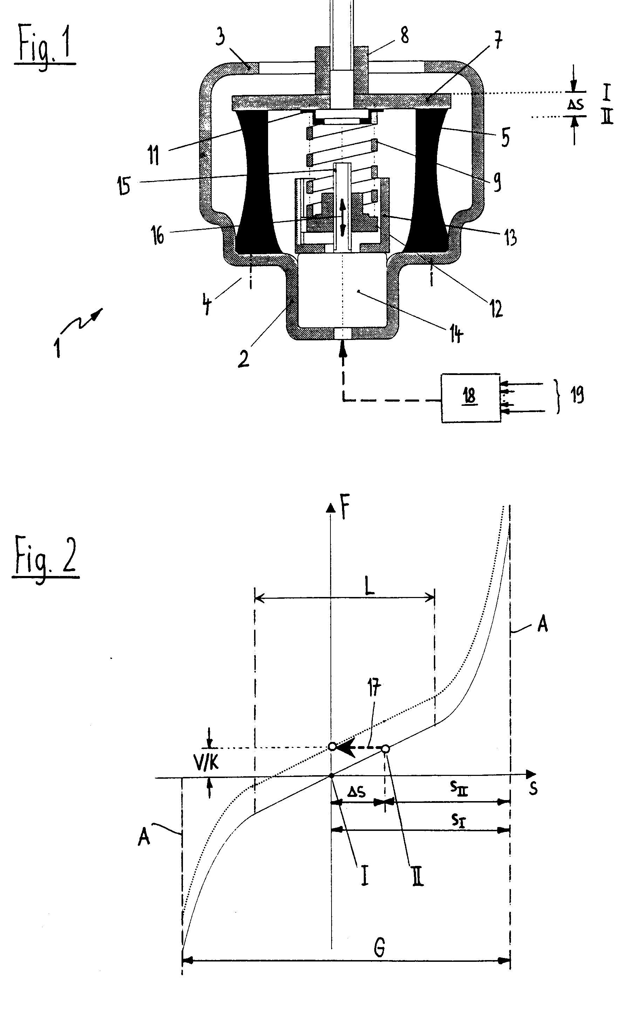

Mögliche Ausführungsbeispiele der Erfindung sind nachfolgend in der Zeichnung dargestellt und näher beschrieben. Die Fig. 1, 3, 4 und 5 zeigen verschiedene Ausführungsbeispiele erfindungsgemäßer Stützlager im Querschnitt. Fig. 2 gibt die Federkennlinie eines Stützlagers gemäß der Erfindung wieder.

Das in Fig. 1 dargestellte Stützlager 1 weist ein Gehäuse 2 auf, dessen obere Bereiche zu einem Anschlag 3 abgebogen sind. An den Stellen 4 wird das Gehäuse 2 an die nicht dargestellte Karosserie eines Fahrzeuges angebunden. Im Gehäuse 2 ist ein erstes Federelement 5 angeordnet. Das Federelement 5 (in Form eines hohlzylindrischen Gummielements) bildet die Tragfeder des Stützlagers 1. Das Gummielement 5 stützt sich einerseits am Gehäuse 2 und andererseits an einer Platte 7 ab. Die Platte 7 trägt oberseitig eine Aufnahme 8 zur Anbindung eines nicht dargestellten Antriebsaggregates.

Erfindungsgemäß ist ein zweites Federelement 9 parallel zum ersten Federelement 5 angeordnet. Das zweite Federelement 9 befindet sich im Inneren des hohlzylindrischen Gummielementes 5 und wird von einer Schraubenfeder gebildet. Die Schraubenfeder 9 stützt sich einerseits in einer Aufnahme 11 an der Unterseite der Platte 7 ab und ist an ihrem unteren Endabschnitt in einer Aufnahme 12 gehalten. Die Aufnahme 12 ist längsverschieblich in einer Führung 13 geführt. Die Führung 13 kann über eine Stelleinheit 14 mit einer Spindel 15 in Richtung des Doppelpfeils 16 verstellt werden. Die Stelleinheit 14 ist bevorzugt als Elektromotor ausgeführt.

In Konstruktionslage wird das Stützlager 1 durch die Gewichtskraft des Antriebsaggregates auf Druck belastet und nimmt die mit I gekennzeichnete Position ein. Bei einer Drehmomentabstützung des laufenden Antriebsaggregates wird eine zusätzliche Kraft auf das Stützlager 1 aufgebracht, woraus eine Einfederung (am Stützlager 1 selbst nicht dargestellt) um den Betrag Δs resultiert (Position II). Eine Regel- oder Steuereinrichtung 18, die diese Einfederung Δs direkt über einen nicht dargestellten Wegaufnehmer bzw. indirekt über Betriebsparameter des Aggregats erfaßt (Eingangssignale 19), steuert nun die Stelleinheit 14 in dem Sinne an, daß durch Aufwärtsbewegung der unteren Aufnahme 12 die Einfederung Δs kompensiert wird, das heißt die ursprüngliche Position I der Platte 7 und damit des Antriebsaggregates wieder erreicht ist. Die hierdurch bewirkte Erhöhung der Vorspannung des zweiten Federelements 9 gleicht also die von dem Antriebsaggregat aufgebrachte Vorlast aus.

Selbstverständlich kann anstelle der Schraubenfeder 10 beispielsweise auch ein zylinderförmiges Gummielement vorgesehen sein. Auch ist es möglich, die Stelleinheit 14 durch eine pneumatisch oder hydraulisch wirkende Kolben-Zylinder-Einheit zu ersetzen.

In Fig. 2 sind die Federkennlinien des Stützlagers 1 in den Positionen I und II dargestellt. Das Diagramm zeigt die Federkennlinien 20 und 21 vor bzw. nach der Kompensation einer Einfederung Δs durch das zweite Federelement 9 als Funktion der Federlast F über dem Federweg s. Der lineare Arbeitsbereich des Stützlagers 1 ist mit L, der Gesamtfederweg mit G bezeichnet. Zu den Anschlägen A hin geht die lineare Federkennlinie in eine progressive Kennung über.

Die Kennlinie 20 beschreibt die Charakteristik des Stützlagers 1 ohne Verstellung des zweiten Federelements 9. In Konstruktionslage I (ohne Vorlast) arbeitet das Stützlager 1 an einer vorgegebenen, optimalen Stelle des linearen Bereichs L und weist einen maximal möglichen Einfederweg s_{I} auf. Nach dem Aufbringen einer Vorlast V federt das Aggregat um den Weg Δs ein und befindet sich nunmehr in der Position II, in der nur mehr ein reduzierter Einfederweg s_{II} zur Verfügung steht. Durch dosierte Kompression der Schraubenfeder 10 wird eine Kompensationskraft K erzeugt, die dem Betrag nach der Vorlast V entspricht und das Antriebsaggregat um den Federweg Δ_{S} zurückverlagert (Pfeil 17), so daß wieder der ursprüngliche Einfederweg s_{I} zur Verfügung steht. Durch die Verstellung des zweiten Federelements 9 erhält das Stützlager eine neue Federkennlinie 21 mit einer im wesentlichen gleichen Federsteifigkeit.

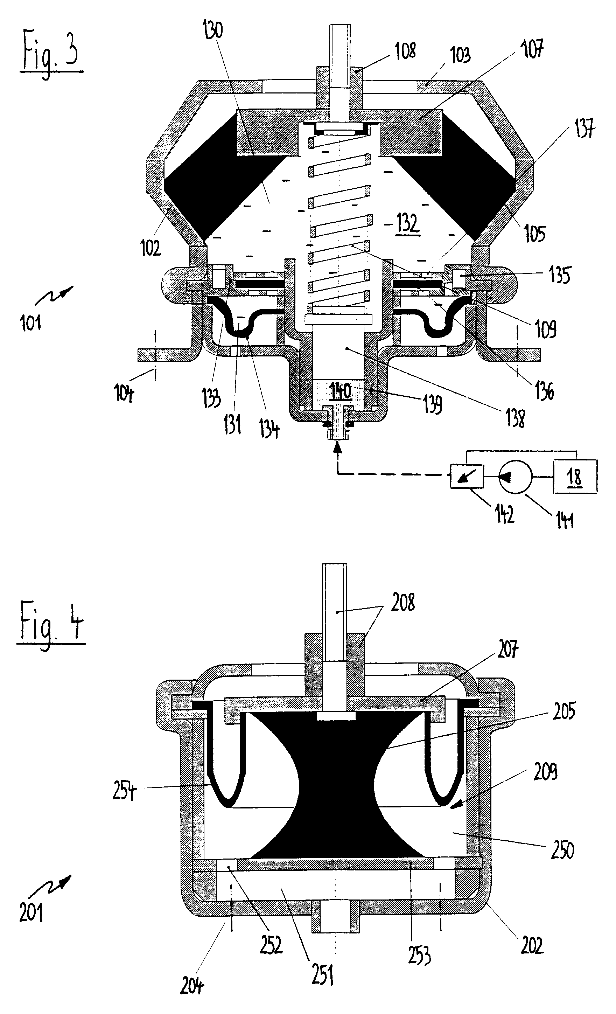

Fig. 3 zeigt ein zweites Ausführungsbeispiel der Erfindung. Das Stützlager 101 besteht aus einem Gehäuse 102 mit Anschlägen 103. An den Bereichen 104 wird das Stützlager 101 an die Karosserie eines Fahrzeuges angebunden. Im Inneren des Gehäuses 102 ist ein erstes, tragendes Federelement 105 in Form eines ringförmigen Gummielementes angeordnet. Das Gummielement 105 wirkt auf eine Platte 107 mit einer Aufnahme 108 für ein Antriebsaggregat und weist eine hydraulische Unterstützung in Form zweier Hydraulikkammern 130 bzw. 131 auf, die mit Hydraulikflüssigkeit 132 befüllt sind. Die beiden Kammern 130 und 131 sind über eine Trennwand 133 voneinander getrennt. Die untere Kammer 131 wird von einem Rollbalg 134 begrenzt. In die Trennwand 133 ist ein Ringkanal 135 eingearbeitet, der bei Federbewegungen des ersten Federelementes 105 einen Flüssigkeitsaustausch zwischen oberer und unterer Kammer 130 bzw. 131 ermöglicht, wodurch eine Dämpfung der Federbewegungen erreicht wird. Bei kleineren Federbewegungen bewerkstelligt eine Membran 136 in der mit Öffnungen 137 versehenen Trennwand 133 den Volumenausgleich.

Das zweite Federelement 109 wird von einer Schraubenfeder gebildet, die zwischen der Platte 107 und einem Kolben 138 angeordnet ist. Der Kolben 138 ist in einem mit Hydraulikflüssigkeit 140 befüllten Zylinder 139 verschieblich geführt. Über ein nur schematisch dargestelltes Ventil 142 kann dem Zylinder 139 Hydraulikflüssigkeit 140 von einer Druckquelle 141 zu- oder abgeführt werden, ebenso wie der Druck im Hydraulikzylinder 139 konstant gehalten werden kann. Die Druckquelle 141 und das Ventil 142 werden von einer Regel- oder Steuereinrichtung 18 angesteuert.

Wie bereits unter Fig. 1 beschrieben, kann über die Regel- oder Steuereinrichtung 18 das zweite Federelement 109 derart verstellt werden, daß eine Einfederung Δs infolge einer Vorlast am Stützlager 101 kompensiert wird.

In Fig. 4 ist ein weiteres Ausführungsbeispiel der Erfindung dargestellt. Ein Stützlager 201 mit einem Gehäuse 202 weist ein erstes Federelement 205 in Form einer Gummifeder auf. Parallel zum ersten Federelement 205 ist ein als Luftfeder ausgebildetes zweites Federelement 209 angeordnet. Die Luftfeder 209 besteht aus zwei Luftkammern 250 und 251, die über Durchtrittsöffnungen 252 in einer Aufnahmeplatte 253 miteinander verbunden sind. Die Luftkammern 250/251 werden einerseits vom Boden des Gehäuses 202 und andererseits von einem Rollbalg 254 begrenzt. Die Niveauregulierung des Stützlagers 201 erfolgt über die Zu- oder Abfuhr von Druckluft mittels einer nicht dargestellten Druckluftquelle und einer zugehörigen Regel- oder Steuerungseinrichtung.

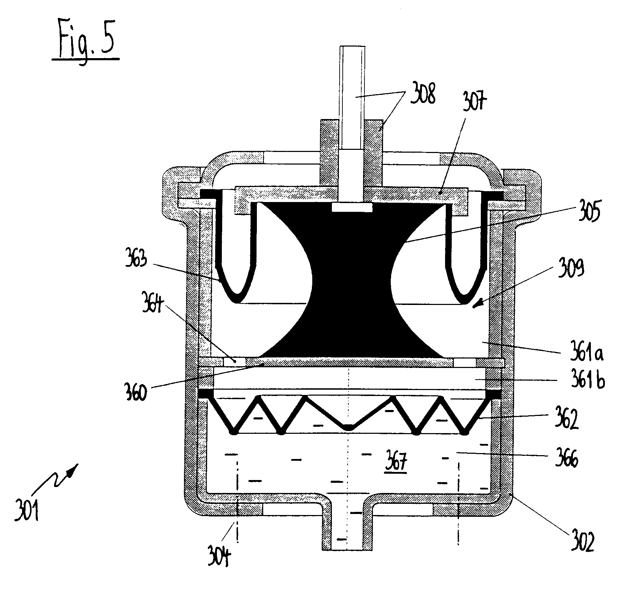

Fig. 5 zeigt eine weitere Ausführungsform der Erfindung. Ein Stützlager 301 nimmt im Inneren seines Gehäuses 302 ein erstes Federelement 305 in Form eines Gummielementes auf. Das Gummielement 305 stützt sich an einer gehäusefesten Aufnahme 360 ab. Oberseitig trägt das Gummielement 305 eine Platte 307 mit einer Anbindung 308 für das Antriebsaggregat, während sich das Gehäuse 302 in den Bereichen 304 an der Karosserie des Fahrzeugs abstützt.

Das zweite Federelement 309 des Stützlagers 301 ist als Luftfeder ausgebildet und parallel zum ersten Federelement 305 angeordnet. Die Luftfeder weist eine zweigeteilte Luftkammer 361a/361b auf, die unterseitig von einem Trennbalg 362 und oberseitig von einem Rollbalg 363 begrenzt wird. Durchgangsöffnungen 364 in der Aufnahme 360 verbinden die beiden Abschnitte 361a bzw. 361b der Luftkammer.

Unterhalb des Trennbalges 362 ist ein Raum 366 für Hydraulikflüssigkeit 367 vorgesehen. Die Hydraulikflüssigkeit 367 wird, wie bereits unter Fig. 3 beschrieben, dem Stützlager 301 über eine Steuerung oder Regelung im Sinne einer Niveauregulierung zu- oder abgeführt.

## Patentansprüche

1. Verfahren zur Regelung oder Steuerung eines wenigstens zwei Federelemente aufweisenden Stützlagers für ein Aggregat, insbesondere für ein Antriebsaggregat eines Kraftfahrzeuges, wobei eines der Federelemente verstellbar ist,
dadurch gekennzeichnet, daß bei Setzerscheinungen im Stützlager (1, 101, 201, 301) das eine Federelement (9, 109, 209, 309) so verstellt wird, daß am Stützlager (1, 101, 201, 301) nach wie vor der gleiche Federweg wie im Ausgangszustand des Stützlagers (1, 101, 201, 301) zur Verfügung steht.

2. Verfahren zur Regelung oder Steuerung eines wenigstens zwei Federelemente aufweisenden Stützlagers für ein Aggregat, insbesondere für ein Antriebsaggregat eines Kraftfahrzeuges, wobei eines der Federelemente verstellbar ist,
dadurch gekennzeichnet, daß bei einer von der Normalbelastung durch die Gewichtskraft des Aggregats abweichenden Belastung (V) des Stützlagers (1, 101, 201, 301) das eine Federelement (9, 109, 209, 309) so verstellt wird, daß am Stützlager (1, 101, 201, 301) nach wie vor der gleiche Federweg (s_{I}) wie unter Normalbelastung zur Verfügung steht.

3. Verfahren nach Anspruch 1 oder 2,
dadurch gekennzeichnet, daß die beiden Federelemente (5, 105, 205, 305 bzw. 9, 109, 209, 309) parallel angeordnet sind.

4. Verfahren nach Anspruch 2 oder 3,
dadurch gekennzeichnet, daß durch die Verstellung des einen Federelements (9, 109, 209, 309) Abweichungen im Gewicht des Aggregats ausgeglichen werden.

5. Verfahren nach Anspruch 2 oder 3,
dadurch gekennzeichnet, daß durch die Verstellung des einen Federelements (9, 109, 209, 309) Abstützkräfte des Aggregats, die aus der Leistungsabgabe und/oder Leistungsaufnahme des Aggregats resultieren, ausgeglichen werden.

6. Verfahren nach Anspruch 2 oder 3,
dadurch gekennzeichnet, daß durch die Verstellung des einen Federelements (9, 109, 209, 309) Trägheitskräfte des Aggregats, die aus dem Betrieb der mit dem Aggregat versehenen Einrichtung resultieren, ausgeglichen werden.

7. Verfahren nach Anspruch 1,
dadurch gekennzeichnet, daß die Setzungskennlinie des Stützlagers (1, 101, 201, 301) als Funktion des Setzweges über der Zeit in einer Steuereinrichtung (18) abgelegt ist, die ihrerseits auf das verstellbare Federelement (9, 109, 209, 309) wirkt.

8. Verfahren nach einem der Ansprüche 2 bis 6,
dadurch gekennzeichnet, daß den Betrieb des Aggregats bzw. den Betrieb der Einrichtung, die mit dem Aggregat versehen ist, bestimmende Parameter als Steuergrößen (19) einer Steuereinrichtung (18) zugeführt werden, die ihrerseits im Sinn einer Konstanthaltung des Federweges (s) des Stützlagers (1, 101, 201, 301) auf das verstellbare Federelement (9, 109, 209, 309) wirkt.

9. Verfahren nach einem der Ansprüche 1 bis 6,
dadurch gekennzeichnet, daß wenigstens ein Sensor vorgesehen ist, der den am Stützlager (1, 101, 201, 301) zur Verfügung stehenden Federweg (s) erfaßt und diesen Wert als Regelgröße (19) einer Regeleinrichtung (18) zuführt, die ihrerseits im Sinne einer Konstanthaltung des Federweges (s) auf das verstellbare Federelement (9, 109, 209, 309) wirkt.

10. Stützlager zur Durchführung des Verfahrens nach einem der vorangegangenen Ansprüche, mit einem ersten (5, 105, 205, 305) und einem zweiten Federelement (9, 109, 209, 309), die parallel zueinander angeordnet sind, wobei das zweite Federelement (9, 109, 209, 309) verstellbar ist.

11. Stützlager nach Anspruch 10,
dadurch gekennzeichnet, daß das zweite Federelement (9, 109, 209, 309) eine etwa lineare Federkennlinie aufweist.

12. Stützlager nach Anspruch 10 oder 11,
dadurch gekennzeichnet, daß das erste Federelement (5, 105, 205, 305) von einer ggf. hydraulisch oder pneumatisch unterstützten Gummifeder gebildet wird.

13. Stützlager nach einem der Ansprüche 10 bis 12,
dadurch gekennzeichnet, daß das zweite Federelement (109) von einer hydraulisch verstellbaren Schraubenfeder aus Stahl gebildet wird.
